Europäisches Patentamt

(19) European Patent Office (11) Publication number: 0 036 865

Office européen des brevets B1

(12) EUROPEAN PATENT SPECIFICATION

(45) Date of publication of patent specification: 13.03.85 (51) Int. Cl.⁴: **F 16 B 1/00, F 16 D 69/00**

(21) Application number: 80901857.5

(22) Date of filing: 19.09.80

(88) International application number:
PCT/SE80/00225

(87) International publication number:
WO 81/00894 02.04.81 Gazette 81/08

(54) Toothed plate connector element.

(30) Priority: 21.09.79 SE 7907824

(43) Date of publication of application:
07.10.81 Bulletin 81/40

(45) Publication of the grant of the patent:
13.03.85 Bulletin 85/11

(84) Designated Contracting States:
AT DE FR GB

(56) References cited:
DE-A-1 933 089
DE-A-2 811 108
DE-C- 173 314
SE-C- 215 367
US-A-2 099 273
US-A-2 247 265

Lueger, Lexikon der Technik, Band 9, S.
263-264

(73) Proprietor: SANDVIK AKTIEBOLAG
S-811 81 Sandviken 1 (SE)

(72) Inventor: DANIELSSON, Mats
Älgstigen 18B
S-811 41 Sandviken (SE)

(74) Representative: Westerlund, Stig Örjan
c/o Sandvik Aktiebolag
S-811 81 Sandviken (SE)

Courier Press, Leamington Spa, England.

## Description

The present invention relates to a toothed plate connector element adapted to be positioned between relatively immovable construction members such that opposite sides of the connector element engage respective ones of the construction members to resist relative movement between the construction members, said element comprising a metal sheet and a plurality of outwardly projecting teeth disposed on both sides of said sheet.

A toothed element of this type is known from DE—A—2 811 108. In this case, however, the element is specifically designed for a bolt connection for allowing turning of the bolt in one direction but preventing turning in the opposite direction. The element is therefore not suitable for fixing components together preventing movement in all directions.

Other toothed plate connector elements are known from DE—A—1 933 089 and US—A—2 099 273 which elements serve to increase the stiffness in wood constructions joined together by bolts by inserting metallic elements between the wood parts, which elements on both sides are provided with a plurality of points, which are forced into the wood parts. Elements of this type are not suitable for demountable constructions, since the surfaces of the construction parts are damaged by repeated demounting. The mentioned elements can neither be used for constructions of material having hard surfaces, which cannot be penetrated by the points as for instance metals, or materials which should be subjected to cracks or burstings when penetrated by the points, as for instance hard plastic materials and ceramic materials. For such constructions it is previously known to use metallic elements which are bent in such a way at their periphery or at the edge of apertures being punched out that the bent parts form resilient tongues. When the construction parts are forced against each other, the corners or the edges of the resilient tongues are pressing against the construction parts with a force dependent on the stiffness of the tongues. These elements, however, do not function very well for hard construction parts, since said tongues only rest against the construction parts without penetrating the same. Therefore, there has been a need on the market for an element, which shall hold not only construction parts made of soft material, as for instance wood, but especially construction parts made of hard material, as for instance steel.

The present invention is intended to satisfy this need by providing a toothed plate connector element having the teeth formed either by etching the sheet or by fastening hard grits to it and the teeth on one side of such sheet offset from the teeth on the other side such that a tooth on one side of said sheet is spaced from the nearest tooth on the other side by a deformation section of said sheet which deforms in response to compression of said element between the construction members to enable surface portions of said sheet disposed opposite each tooth to contact the respective construction member.

The advantage of this structure is explained more closely in the following specification with background of the appended drawings showing:

Fig. 1, a section of an element during manufacture of a first embodiment of the invention.

Fig. 2, the same section as in Fig. 1 after the manufacture.

Fig. 3, the same section as in Fig. 1 and 2 after applying the element in a structure.

A second embodiment of the invention is not illustrated in the drawings.

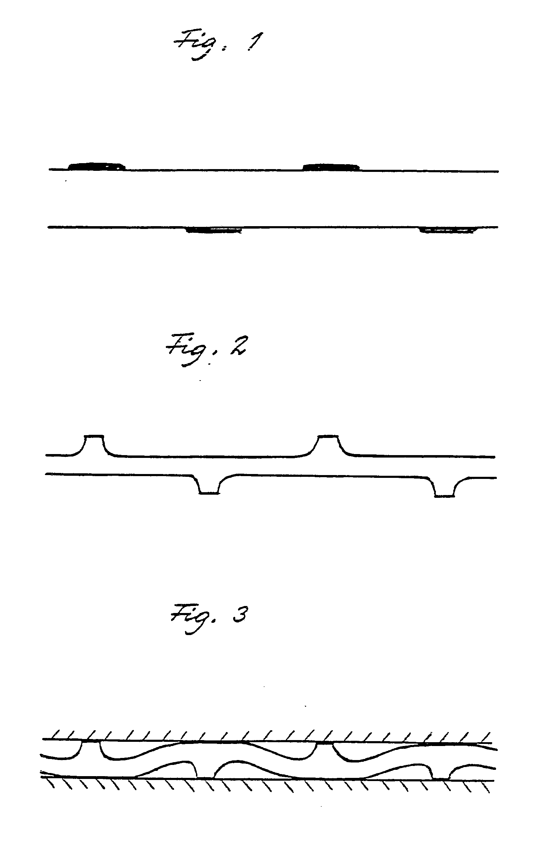

The first embodiment constitutes a toothed plate connector element, which is produced by etching thin strips or sheets of material, which is hardened or is capable of being hardened. In this connection the production occurs in the following way. A strip is on both sides covered by "screenprinting", another printing method or in a photographic way with a colour according to a certain pattern, which colour prevents etching, the patterns being so adapted that a covered area on one side always corresponds to an uncovered area on the other side (Fig. 1). The strip is etched on both sides by spraying with or immersion into an etching liquid, for instance ferrous chloride dissolved in water, the surface layer of the strip being removed in the areas that are not covered by colour. The etching depth is made equal on both sides of the strip by symmetrical arrangement of the etching device or by adapting the conditions of spraying. A certain etching occurs also under the colour on the covered parts, the width of which shall be so large that parts of the original surface of the strip remain after etching, undercut, flat pointed teeth or teeth having the form of flat pointed cones, wedges or pyramids being obtained. After the etching the colour layer is removed, whereafter toothed elements of desired form can be cut or punched out from the strip (Fig. 2). These toothed elements, if wished, can be given an increased hardness by hardening, chromium-plating or another hard metallic layer.

When applying an element between two construction parts, which are forced together, the thin part of the element will be bent so that the compressive force against every standing pattern detail is distributed over a substantially larger, smooth surface on the opposite side of the strip (Fig. 3). Due to that fact considerable shearing forces can be transmitted without giving dangerous concentrations of flexural tensions in the toothed element and with a minimal mutual movement between the construction parts.

The toothed element has the following advantages in relation to previously known techniques:

1. The points can be very closely located so that the power transmission is distributed on a large number of points, the penetrating depth of which can be made small. Due to that fact the damages on the surfaces of the construction elements can be reduced so that the joint can be demounted and put together repeated times without impaired function.

2. The toothed element can be given a small and well-defined thickness so that the finished construction can be formed with well-defined measures, which are not influenced by the size of the tightening of bolts or other elements for forcing the parts of the construction together.

3. The points of the toothed element can be made so hard and so sharp that with a small penetrating depth they can transmit large forces to the construction parts of metallic materials as for instance unhardened steel.

4. The toothed element can be made as large, flexible pieces, which can be formed on the bais of the surfaces of the adjacent construction parts.

The second embodiment comprises a toothed element, which is manufactured from metal strips or metal sheets, which are provided with grits of a very hard material, as for instance cemented carbide. In this connection a metal strip of a certain length can be provided with the hard grits, whereafter the strip can be cut in suitable sizes. Instead of doing so the metal strip can first be cut in suitable sizes, whereafter the strip pieces are covered by for instance cemented carbide grits.

The hard grits are fastened on to the metal strip or metal sheets by means of gluing or soldering or in another suitable way.

The second embodiment of the invention is particularly suitable to use for construction parts made of hard metallic materials.

The tooth height is not more than 2 mm and preferably less than 1 mm for the two embodiments. It has turned out that a tooth height that is larger or equal to 0.2 mm but less or equal to 0.4 mm is particularly advantageous.

The invention is particularly suitable to use separately or together with a screw joint within building industry, vehicle industry and engineering industry.

The construction parts mentioned in the application comprise elements, which shall be prevented to slide relative to each other, as for instance beams of different kinds, parts in vehicles as for instance engine and chassis, and parts in machines as for instance a stand for a crane or another equipment and a plate or another bed in the machine, which stand shall be fastened on to the plate.

## Claims

1. Toothed plate connector element adapted to be positioned between relatively immovable construction members such that opposite sides of the connector element engage respective ones of the construction members to resist relative movement between the construction members, said element comprising a metal sheet and a plurality of outwardly projecting teeth disposed on both sides of said sheet, characterized in that the teeth are formed either by etching the sheet or by fastening hard grits to it and in that the teeth on one side of said sheet are offset from the teeth on the other side such that a tooth on one side of said sheet is spaced from the nearest tooth on the other side by a deformation section of said sheet which deforms in response to compression of said element between the construction members to enable surface portions of said sheet disposed opposite each tooth to contact the respective construction member.

2. Toothed plate connector element according to claim 1, characterized in that the tooth height is less than 2 mm and preferably less than 1 mm.

3. Toothed plated connector element according to claim 2, characterized in that the tooth height is 0.2—0.4 mm.

4. Toothed plate connector element according to any one of the claims 1—3, characterized in that the teeth are flat pointed.

5. Toothed plate connector element according to any one of the claims 1—3, characterized in that the teeth have the form of flat pointed cones, wedges or pyramids.

6. Toothed plate connector element according to any one of the claims 1—5, characterized in that its hardness has been increased by hardening.

7. Toothed plate connector element according to any one of the claims 1—5, characterized in that its hardness has been increased by plating with a hard, metallic layer as for instance chromium.

8. Toothed plate connector element according to any one of the claims 1—3, characterized in that the teeth have been fastened onto the surfaces of the metallic plate by means of gluing, soldering or in another suitable way.

9. Toothed plate connector element according to claim 8, characterized in that the teeth comprise cemented carbide.

## Revendications

1. Elément d'assemblage en forme de plaque dentée propre à être placé entre des éléments de construction immobiles l'un par rapport à l'autre, de telle sorte que les côtés opposés de l'élément d'assemblage attaquent des éléments de construction correspondants pour s'opposer à un déplacement relatif des éléments de construction, l'élément d'assemblage comprenant une tôle et plusieurs dents qui font saillie vers l'extérieur et qui sont disposées sur les deux faces de la tôle, caractérisé en ce que les dents sont formées soit par morsure chimique de la tôle, soit par fixation de particules abrasives dures sur cette tôle et les dents situées sur une face de la tôle sont décalées de celles situées sur l'autre face de telle sorte qu'une dent située sur une face de la tôle soit espacée de la dent la plus proche située sur l'autre face par une section déformée de la tôle qui se déforme en réaction à la compression de l'élément d'assemblage entre les éléments de construction afin de permettre à des parties superficielles de la tôle opposées à chaque dent de venir en contact avec l'élément de construction correspondant.

2. Elément d'assemblage en forme de plaque dentée suivant la revendication 1, caractérisé en ce que la hauteur des dents est inférieure à 2 mm et est de préférence inférieure à 1 mm.

3. Elément d'assemblage en forme de plaque dentée suivant la revendication 2, caractérisé en ce que la hauteur des dents est de 0,2 à 0,4 mm.

4. Elément d'assemblage en forme de plaque dentée suivant l'une quelconque des revendications 1 à 3, caractérisé en ce que les dents présentent une pointe aplatie.

5. Elément d'assemblage en forme de plaque dentée suivant l'une quelconque des revendications 1 à 3, caractérisé en ce que les dents ont la forme de cônes, de coins ou de pyramides à pointe aplatie.

6. Elément d'assemblage en forme de plaque dentée suivant l'une quelconque des revendications 1 à 5, caractérisé en ce que sa dureté a été accrue par trempe.

7. Elément d'assemblage en forme de plaque dentée suivant l'une quelconque des revendications 1 à 5, caractérisé en ce que sa dureté a été accrue par placage au moyen d'une couche métallique dure, par exemple du chrome.

8. Elément d'assemblage en forme de plaque dentée suivant l'une quelconques des revendications 1 à 3, caractérisé en ce que les dents ont été fixées sur les surfaces de la tôle par collage, soudage ou d'une autre manière appropriée.

9. Elément d'assemblage en forme de plaque dentée suivant la revendication 8, caractérisé en ce que les dents comprennent du carbure cémenté.

## Patentansprüche

1. Gezahnte Platte als Verbindungselement für die Anordnung zwischen relativ unbeweglichen Bauteilen derart, daß einander gegenüberliegende Seiten des Verbindungelementes an betreffenden Seiten der Bauteile anliegen, um einer Relativbewegung zwischen den Bauteilen entgegen zu wirken, wobei das Element ein Metallblech und mehrere auf beiden Seiten dieses Bleches nach aussen vorspringende Zähne besitzt, dadurch gekennzeichnet, daß die Zähne entweder durch Ätzen des Bleches oder durch Befestigung von Körnern eines harten Materiales auf ihm gebildet sind und daß die Zähne auf einer Seite des Bleches gegenüber den Zähnen auf der anderen Seite derart versetzt sind, daß ein Zahn auf einer Seite des Bleches von dem nächsten Zahn auf der anderen Seite um einen Deformationsabschnitt des Bleches beabstandet ist, welches sich als eine Folge einer Kompression des Elementes zwischen den Bauteilen derart deformiert, daß Oberflächen abschnitte des Bleches gegenüber jedem Zahn das betreffende Bauteil berühren.

2. Gezahnte Platte also Verbindungselement nach Anspruch 1, dadurch gekennzeichnet, daß die Zahnhöhe weniger als 2 mm und vorzugsweise weniger also 1 mm ist.

3. Gezahnte Platte als Verbindungselement nach Anspruch 2, dadurch gekennzeichnet, daß die Zahnhöhe 0,2 bis 0,4 mm ist.

4. Gezahnte Platte also Verbindungselement nach einem der Ansprüche 1 bis 3, dadurch gekennzeichnet, daß die Zähne eine Flachspitze besitzen.

5. Gezahnte Platte als Verbindungselement nach einem der Ansprüche 1 bis 3, dadurch gekennzeichnet, daß die Zähne die Form von Kegeln, Keilen oder Pyramiden mit abgeflachter Spitze haben.

6. Gezahnte Platte als Verbindungselement nach einem der Ansprüche 1 bis 5, dadurch gekennzeichnet, daß ihre Härte durch Härtung gesteigert wurde.

7. Gezahnte Platte also Verbindungselement nach einem der Ansprüche 1 bis 5, dadurch gekennzeichnet, daß ihre Härte durch Metallisieren mit einer harten Metallschicht, wie beispielsweise Chrom, erhöht wurde.

8. Gezahnte Platte also Verbindungselement nach einem der Ansprüche 1 bis 3, dadurch gekennzeichnet, daß die Zähne auf den Oberflächen der Metallplatte durch Kleben, Löten oder auf andere geeignete Weise befestigt wurden.

9. Gezahnte Platte als Verbindungselement nach Anspruch 8, dadurch gekennzeichnet, daß die Zähne aus Sintercarbid bestehen.

Fig. 1

Fig. 2

Fig. 3